# FASCICULE DE BREVET EUROPEEN

(11) **EP 1 195 871 B1**
(45) Date de publication et mention de la délivrance du brevet: **31.08.2011**
(21) Numéro de dépôt: 01402547.2
(22) Date de dépôt: 02.10.2001
(51) Int. Cl.: H02G 5/06

(54) **Ligne polyphasée à isolation gazeuse et module de raccordement pour un passage polyphase/monophase dans une telle ligne**
Mehrphasige druckgasisolierte Leitung und Anschlussmodule für ein-oder mehrphasige Durchführung in einer solchen Leitung
Polyphase gas insulated line and coupling module for a polyphase/monophase lead-through in such a line

(30) Priorité: 09.10.2000 FR 0012884
(43) Date de publication de la demande: 10.04.2002
(73) Titulaire: AREVA T&D SAS, 92084 Paris La Défense Cedex (FR)
(72) Inventeur: Gelloz, Bernard, 73100 Saint Offenge Dessous (FR); Berals, Jean-Michel, 73100 Aix Les Bains (FR); Rech, Christophe, 73100 Gresy-sur-Aix (FR)
(74) Mandataire: Poulin, Gérard

(56) Documents cités:
- EP-A- 0 535 766
- EP-A- 0 788 208
- DE-A- 3 414 366

## Description

L'invention porte sur une ligne polyphasée à isolation gazeuse comprenant des sections formées chacune par une enveloppe métallique remplie d'un gaz diélectrique sous pression et contenant les conducteurs électriques de phase. Ce type de ligne doit pouvoir recevoir des appareillages de mesure de courant ou autres, comme un transformateur de courant. Le montage d'un transformateur polyphasé nécessite que les bobinages formant le secondaire du transformateur soient disposés respectivement autour des conducteurs électriques de phase, ces conducteurs étant disposés dans une même enveloppe métallique de forme tubulaire remplie d'un gaz diélectrique d'isolation sous une pression de quelques bars. Jusqu'à présent, les bobinages du secondaire sont montés à l'intérieur de l'enceinte métallique d'un module de raccordement entre deux sections de ligne voisines, et sont donc noyés dans le gaz d'isolation diélectrique. Cette disposition des bobinages requiert que les fils électriques du secondaire doivent être passés à travers l'enceinte métallique du module par des traversées étanches, ce qui est particulièrement coûteux à réaliser. Comme les bobinages sont disposés à l'intérieur de l'enceinte, le volume intérieur du module doit être conçu en conséquence, ce qui pose des problèmes de tenue à la pression pour l'enceinte comme pour les traversées étanches.

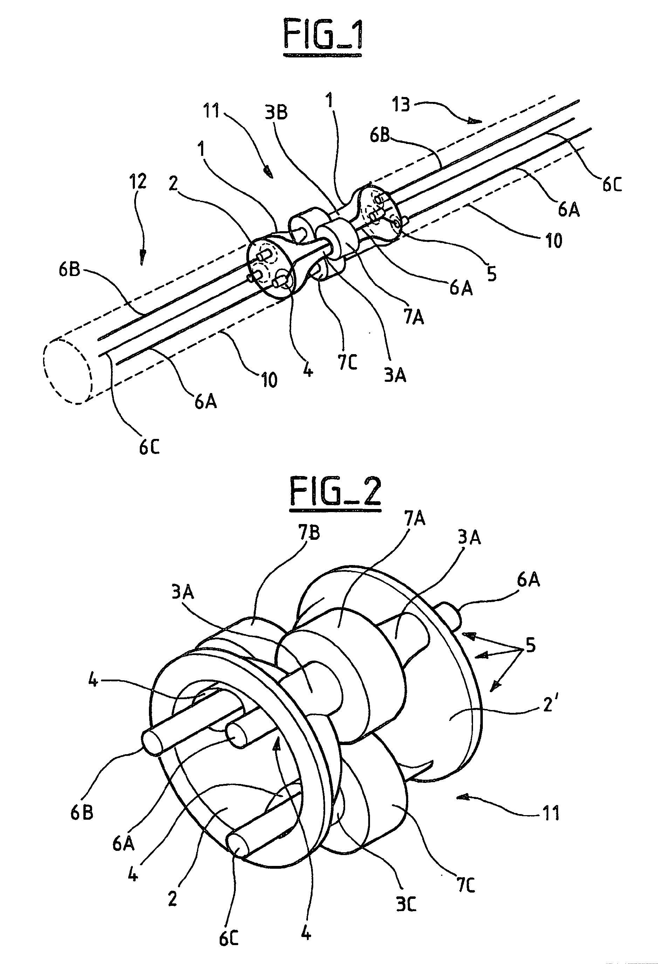

D'autre part, le document de brevet EP 0 535 766 divulgue un module de raccordement pour séparer une ligne triphasée à isolation gazeuse en trois lignes monophasées distinctes, ou réciproquement. Comme visible dans la figure 1, le module comporte pour ce faire deux flasques 5 montés tête bêche divisant chacun un tronçon triphasé 1, 2 en trois tronçons monophasés, les deux flasques étant reliés par trois raccords coudés 10 distincts. Le module représenté dans les figures 1 et 2 forme donc une enveloppe métallique constituée localement de plusieurs parties tubulaires.

Comme visible dans les figures, le module comporte des éléments de jonction entre les flasques 5 et les coudes 10 non référencés sur la figure, qui sont en appui sur les brides 9.

Le but de l'invention est de pallier les inconvénients précités.

A cet effet, l'invention a pour objet une ligne polyphasée à isolation gazeuse avec les caracteristiques de la revendication 1.

Avec cette construction locale de la ligne, il est possible de monter les bobinages du secondaire d'un transformateur de courant dans l'air autour des parties tubulaires du module de raccordement, ce qui contribue à réduire de façon importante le coût de fabrication et de maintenance du transformateur de courant.

L'invention s'étend à un procédé de montage du module de raccordement pour recevoir les bobinages secondaires d'un transformateur de courant.

Un exemple de réalisation de la ligne polyphasée à isolation gazeuse selon l'invention avec son module de raccordement est illustré sur les dessins.

La figure 1 illustre schématiquement deux sections voisines d'une ligne polyphasée avec un module de raccordement selon l'invention ayant plusieurs parties tubulaires.

La figure 2 illustre schématiquement, en perspective, le module de raccordement de la figure 1 muni de bobinages autour des parties tubulaires pour constituer un transformateur de courant.

La figure 3 illustre schématiquement, en coupe longitudinale, le module de raccordement montré sur la figure 2, deux phases sur trois étant montrées décalées en profondeur.

Sur la figure 1, la ligne polyphasée, ici une ligne triphasée, comprend des sections 12, 13 formées chacune par une enveloppe métallique 10 remplie d'un gaz diélectrique sous une pression de quelques bars. Les trois conducteurs de phases de chaque section 12 ou 13 sont entourés du gaz diélectrique et sont disposés parallèles entre eux selon un schéma en triangle équilatéral, de façon classique. Les deux sections voisines ou adjacentes 12 et 13 sont reliées entre elles par l'intermédiaire d'un module de raccordement 11 dont l'enveloppe métallique 1 est localement constituée d'autant de parties tubulaires que de conducteurs de phases, dans le cas présent de trois parties tubulaires 3A,3B,3C visibles sur la figure 2. Chaque partie tubulaire est remplie de gaz diélectrique et est traversée par un conducteur de phase 6A,6B,6C unique, de telle sorte que le module permet le passage local d'une enveloppe triphasée à trois enveloppes monophasées.

L'invention s'applique à toute ligne polyphasée à au moins trois phases. Par exemple, un module de raccordement comporte quatre enveloppes monophasées dans une ligne tétraphasée selon l'invention.

Comme visible sur la figure 2, le module de raccordement 11 est ouvert à ses deux extrémités de façon à ce que les volumes des sections 12 et 13 communiquent entre eux. Le module 11 pourrait également être fermé de façon étanche par un ou plusieurs isolateurs à une ou à ses deux extrémités de façon à isoler électriquement les deux sections adjacentes 12,13 ou à isoler électriquement le dit module de ces sections.

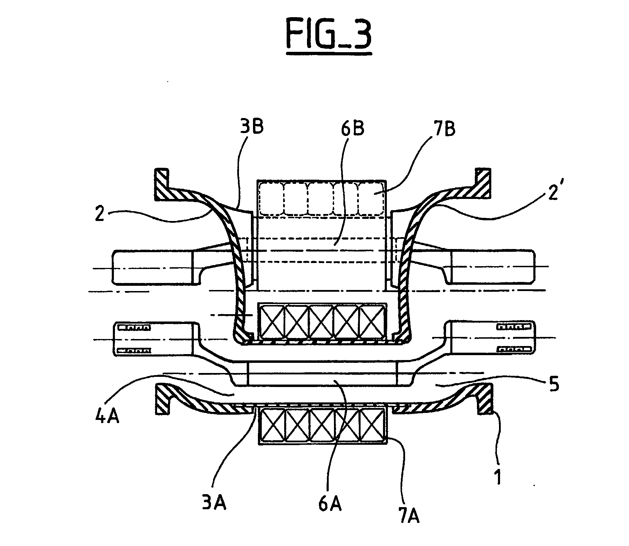

Comme visible sur les figures 2 et 3, l'enveloppe métallique 1 du module 11 est constituée d'un premier flasque 2 et d'un second flasque 2' d'extrémité qui ont chacun la forme d'une calotte et qui présentent chacun des orifices 4,5 d'ouverture déterminée pour permettre le passage des conducteurs de phase 6A,6B,6C avec une distance suffisante d'isolement entre chaque conducteur et l'enveloppe 1.

Les parties tubulaires 3A,3B,3C de l'enveloppe 1 sont formées chacune d'un tube de liaison qui entoure un orifice 4 du premier flasque 2 et un orifice 5 du second flasque 2', ces deux orifices étant traversés par le même conducteur de phase.

Le module peut être constitué en deux pièces complémentaires venues de moulage, avec une des deux pièces constituée par un flasque tel que 2 prolongé par les tubes de liaison en formant un seul bloc.

Les parties tubulaires 3A,3B,3C sont de préférence parallèles entre elles et dans le cas d'une configuration triphasée, elles sont disposées de préférence selon un schéma en triangle équilatéral pour réduire au mieux l'encombrement de l'enceinte 1. Elles sont entourées chacune d'un espace d'air déterminé dans lequel peut être mis en place un bobinage 7A,7B,7C du secondaire d'un transformateur de courant comme montré sur les figures 2 et 3. Chaque bobinage 7A,7B,7C entoure donc dans l'air une partie tubulaire 3A,3B,3C. Le module de raccordement selon l'invention n'est pas exclusivement destiné au montage de transformateurs de courant et des capteurs de mesure ou autre (non représentés) peuvent être disposés chacun dans l'air autour ou à proximité des parties tubulaires 3A,3B,3C. S'il n'est pas nécessaire que les capteurs entourent complètement chacun des conducteurs de phase, les parties tubulaires peuvent être disposées jointives ou quasiment jointives, de façon à réduire l'encombrement de l'enceinte.

Les tubes de liaison peuvent avantageusement être rapportés sur un des flasques d'extrémité et fixés à celui-ci par emboîtement et soudage par exemple, pour simplifier la mise en place des bobinages autour des tubes. Plus particulièrement, pour monter le module de raccordement 11 avec des bobinages secondaires d'un transformateur de courant, on met d'abord en place chaque bobinage autour d'un tube de liaison et ensuite on assemble les deux flasques d'extrémité par l'intermédiaire des tubes de liaison pour former l'enveloppe du module 11. Ensuite, on passe un conducteur électrique de phase dans chaque tube de liaison.

Bien entendu, on pourra envisager d'autres formes de réalisation du module 11 selon l'invention avec des tubes de liaison cylindriques ou non, parallèles ou non et de forme plus complexe que celle montrée sur les figures.

## Revendications

1. Une ligne polyphasée à isolation gazeuse comprenant des sections (12, 13) formées chacune par une enveloppe métallique (10) remplie d'un gaz diélectrique sous pression et contenant au moins trois conducteurs de phase (6A, 6B, 6C) disposés selon un schéma en triangle, deux sections voisines (12, 13) étant reliées entre elles par l'intermédiaire d'un module de raccordement (11) dont l'enveloppe métallique (1) est localement constituée de plusieurs parties tubulaires (3A, 3B, 3C), **caractérisé**
**en ce que** chacune des parties tubulaires (6A, 6B, 6C) est remplie de gaz diélectrique et traversée par un conducteur de phase (6A, 6B, 6C) unique constituant une liaison électrique passive,
**en ce que** l'enveloppe métallique (1) est constituée d'un premier (2) et d'un second (2') flasque d'extrémité, chacun en forme de calotte et présentant des orifices (4, 5) d'ouverture déterminée pour permettre le passage de conducteurs de phase (6A, 6B, 6C) avec une distance d'isolement suffisante entre chaque conducteur et l'enveloppe (1), et dans lequel les parties tubulaires (3A, 3B, 3C) de ladite enveloppe (1) du module sont chacune formées d'un tube de liaison entourant un orifice (4) du premier flasque (2) et un orifice (5) du second flasque (2') traversés par le même conducteur de phase, et en ce que les parties tubulaires (3A, 3B, 3C) sont parallèles entre elles.

2. La ligne à isolation gazeuse selon la revendication 1, dans laquelle le module de raccordement (11) est ouvert à ses deux extrémités de façon à ce que les volumes desdites sections (12, 13) communiquement entre eux.

3. La ligne à isolation gazeuse selon la revendication 1, dans laquelle le module de raccordement (11) est fermé de façon étanche par un ou plusieurs isolateurs à une ou deux de ses extrémités de façon à isoler entre elles deux sections voisines (12, 13) ou à isoler ledit module desdites sections.

4. La ligne à isolation gazeuse selon la revendication 1, dans laquelle un flasque (2, 2') est prolongé par lesdits tubes de liaison en formant une pièce unique en un seul bloc.

5. La ligne à isolation gazeuse selon la revendication 1, dans laquelle trois parties tubulaires parallèles (3A, 3B, 3C) sont disposées selon un triangle équilatéral.

6. La ligne à isolation gazeuse selon l'une des revendications 1, 4 ou 5, dans laquelle les parties tubulaires (3A, 3B, 3C) sont chacune entourées d'un espace d'air déterminé.

7. La ligne à isolation gazeuse selon la revendication 6, dans laquelle des bobinages (7A, 7B, 7C) formant le secondaire d'un transformateur de courant sont chacun disposés dans l'air autour d'une desdites parties tubulaires (3A, 3B, 3C).

8. La ligne à isolation gazeuse selon l'une des revendications 1, 4 à 7, dans lequel des capteurs sont disposés chacun dans l'air autour ou à proximité desdites parties tubulaires (3A, 3B, 3C).

9. Un procédé de montage du module de raccordement (11) de la ligne d'isolation gazeuse selon la revendication 7, dans lequel chaque bobinage (7A,7B, 7C) est d'abord mis en place autour d'une partie tubulaire (3A, 3B, 3C) avant que les deux flasques d'extrémité (2, 2') soient assemblés par l'intermédiaire desdites parties tubulaires (3A, 3B, 3C) pour former l'enveloppe métallique (1) dudit module.

## Claims

1. A gas-insulated multi-phase line comprising sections (12, 13), each of which is formed by metal cladding (10) filled with a dielectric gas under pressure and containing at least three phase conductors (6A, 6B, 6C) disposed in a triangle configuration, two adjacent sections (12, 13) being connected together via a connection module (11), the metal cladding (1) of which is locally made up of several tubular portions (3A, 3B, 3C), **characterized**
**in that** each of the tubular portions (3A, 38, 3C) is filled with dielectric gas and crossed by a single phase conductor (6A, 6B, 6C), constituting a passive electrical connection,
**in that** the metal cladding (1) consists of a first (2) and a second (2') end cap, each dish-shaped and having orifices (4, 5) of aperture determined to enable phase conductors (6A, 6B, 6C) to pass through them with a sufficient isolation distance between each conductor and the cladding (1), and wherein the tubular portions (3A, 3B, 3C) of said cladding (1) of the module are each formed with a link tube surrounding an orifice (4) of the first end cap (2) and an orifice (5) of the second end cap (2'), and in that tubular portions (3A, 3B, 3C) are parallel to each other.

2. The gas-insulated line according to claim 1, wherein the connection module (11) is open at both of its ends so that the volumes of said sections (12, 13) communicate with each other.

3. The gas-insulated line according to claim 1, wherein the connection module (11) is closed in gastight manner by one or morse insulators at either or both of its ends so as to isolate two adjacent sections (12, 13) from each other, or so as to isolate said module from said sections.

4. The gas-insulated line according to claim 1, wherein one end cap (2, 2') is extended by said link tubes forming an integrally-molded single piece therewith.

5. The gas-insulated line according to claim 1, wherein three parallel tubular portions (3A, 3B, 3C) are disposed in an equilateral triangle configuration.

6. The gas-insulated line according to one of claims 1, 4 or 5, wherein the tubular portions (3A, 3B, 3C) are each surrounded by a determined volume of air.

7. The gas-insulated line according to claim 6, wherein windings (7A, 7B, 7C) forming the secondary of a current transformer are each disposed in air around respective ones of said tubular portions (3A, 3B, 3C).

8. The gas-insulated line according to one of claims 1, 4 to 7, wherein sensors are each disposed in air around or in the vicinity of respective ones of said tubular portions (3A, 3B, 3C).

9. A method for assembling the connection module (11) of the gas-insulated line according to claim 7, wherein each winding (7A, 7B, 7C) is firstly put into place around a tubular portion (3A, 3B, 3C) before the two end caps (2, 2') are assembled together via said tubular portions (3A, 3B, 3C) for forming the metal cladding (1) of said module.

## Patentansprüche

1. Mehrphasige gasisolierte Leitung, die Abschnitte (12, 13) aufweist, welche jeweils aus einer mit einem dielektrischen Druckgas gefüllten Metallkapselung (10) gebildet sind, und zumindest drei Phasenleiter (6A, 6B, 6CF) enthält, die nach einem dreieckförmigen Schema angeordnet sind, wobei zwei benachbarte Abschnitte (12, 13) über ein Anschlussmodul (11) miteinander verbunden sind, dessen Metallkapselung (1) bereichsweise aus mehreren rohrförmige Teilen (3A, 3B, 3C) besteht, **dadurch gekennzeichnet, dass** jedes der rohrförmigen Teile (6A, 6B, 6C) mit dielektrischem Gas gefüllt ist und von einem einzigen Phasenleiter (6A, 6B, 6C) durchsetzt wird, der eine passive elektrische Verbindung darstellt,
die Metallkapselung (1) aus einem ersten (2) und einem zweiten (2') Endflansch besteht, die jeweils kalottenförmig sind und Bohrungen (4, 5) mit bestimmter Öffnung zum Durchführen von Phasenleitern (6A, 6B, 6C) mit ausreichender Luftstrecke zwischen jedem Leiter und der Kapselung (1) aufweisen, und wobei die rohrförmigen Teile (3A, 3B, 3C) der Kapselung (1) des Moduls jeweils aus einem Verbindungsrohr gebildet sind, das eine Bohrung (4) des ersten Flansches (2) und eine Bohrung (5) des zweiten Flansches (2') umgibt, die von dem gleichen Phasenleiter durchsetzt werden, und dass die rohrförmigen Teile (3A, 3B, 3C) parallel zueinander verlaufen.

2. Gasisolierte Leitung nach Anspruch 1, wobei das Anschiussmodul (11) an seinen beiden Enden offen ist, so dass die Rauminhalte der Abschnitte (12, 13) miteinander kommunizieren.

3. Gasisolierte Leitung nach Anspruch 1, wobei das Anschlussmodul (11) an dem einen oder an zwei seiner Enden in dichter Weise von einem oder mehreren Isolatoren verschlossen wird, so dass zwei benachbarte Abschnitte (12, 13) voneinander isoliert werden bzw. das Modul von den Abschnitten isoliert wird.

4. Gasisolierte Leitung nach Anspruch 1, wobei ein Flansch (2, 2') von den Verbindungsrohren verlängert wird, indem ein einzelnes, einstückiges Teil gebildet wird.

5. Gasisolierte Leitung nach Anspruch 1, wobei drei parallel verlaufende rohrförmige Teile (3A, 3B, 3C) in Form eines gleichseitigen Dreiecks angeordnet sind.

6. Gasisolierte Leitung nach einem der Ansprüche 1, 4 oder 5, wobei die rohrförmigen Teile (3A, 38, 3C) jeweils von einem bestimmten Luftraum umgehen werden.

7. Gasisolierte Leitung nach Anspruch 6, wobei Wicklungen (7A, 7B, 7C), welche die Sekundärwicklung eines Stromtransformators bilden, jeweils in der Luft um eines der rohrförmigen Teile (3A, 3B, 3C) herum angeordnet sind.

8. Gasisolierte Leitung nach einem der Ansprüche 1, 4 bis 7, wobei Sensoren jeweils in der Luft um die rohrförmigen Teile (3A, 3B, 3C) herum oder in deren Nähe angeordnet sind.

9. Verfahren zum Montieren des Anschlussmoduls (11) der gasisolierten Leitung nach Anspruch 7, wobei jede Wicklung (7A, 7B, 7C) zunächst um ein rohrförmiges Teil gelegt wird, bevor die beiden Endflansche (2, 2') über die rohrförmigen Teile (3A, 3B, 3C) zusammengefügt werden, um die Metallicapselung (1) des Moduls zu bilden.
